# EUROPEAN PATENT SPECIFICATION

(11) **EP 3 574 206 B1**
(45) Date of publication and mention of the grant of the patent: **13.05.2020**
(21) Application number: 17809296.1
(22) Date of filing: 06.12.2017
(51) Int. Cl.: F03B 3/02, F03B 11/00

(54) **HYDRAULIC MACHINE COMPRISING A RADIAL FLOW RUNNER**
HYDRAULISCHE MASCHINE MIT RADIALFLUSSLÄUFER
MACHINE HYDRAULIQUE COMPRENANT UNE ROUE À ÉCOULEMENT RADIAL

(30) Priority: 24.01.2017 US 201762449835 P; 14.06.2017 US 201762519472 P; 14.08.2017 US 201762545135 P
(43) Date of publication of application: 04.12.2019
(73) Proprietor: Voith Patent GmbH, 89522 Heidenheim (DE)
(72) Inventor: COULSON, Stuart, Seven Valleys, PA 17360 (US)
(74) Representative: Voith Patent GmbH - Patentabteilung
(86) International application number: PCT/EP2017/081661
(87) International publication number: WO 2018/137822

(56) References cited:
- JP-A- S5 920 572
- JP-A- 2002 235 652
- JP-A- 2007 154 667
- JP-A- 2011 137 407
- US-A- 5 823 740

## Description

The present invention relates generally to hydroelectric turbine or pump installations comprising a radial flow runner of the Francis type.

JP 2007 154667 A discloses a hydraulic machine comprising a runner of Francis type, a head cover and a lower cover, whereas the runner comprises a low and a high pressure side, a crown, a band, a plurality of blades, each blade being defined by a pressure surface, an oppositely facing suction surface, an edge adjoining the high pressure side and a spaced apart edge adjoining the low pressure side of the runner, whereas the crown comprises sealing means to seal the space between the crown and head cover against water from the high pressure side, whereas the runner comprises at least one passage being capable to drain high pressure leakage water passing the sealing means to the low pressure side, and the passage comprises an inlet aperture located in a portion of the crown which during operation is exposed to high pressure leakage water.

JP S59 20572 A is a similar document.

US 5 823 740 A discloses a Francis turbine with passages integrally formed within the blade, which are for a flow of gas as air.

JP 2011 137407 A and JP 2002 235652 A disclose passages in the blades.

Hydraulic machines comprising a radial flow runner of the Francis type are suffering from axial thrust applied to the runner of the hydraulic machine. Since the sealing between the runner and the high pressure side of the water passage cannot be made perfectly tight, pressurized water can get in the space between the head cover of the hydraulic machine and the runner crown resulting in a high axial thrust. To reduce the axial thrust prior art has proposed several concepts. One concept comprises balancing pipes draining the water passing the seals to the low pressure side of the water passage (see e.g. US 1,820,150 to Moody). Another concept comprises balance holes within the runner crown leading to the runner hub or to the space between the blades of the runner (see e.g. US 4,086,020 to Seiichi and Syoji). Balancing pipes are expensive. The effectiveness of the prior art balancing holes depends on the revolution speed of the runner and the blade geometry and therefore leading not always to satisfactory results concerning thrust reduction. Especially in the case of modernization projects when an existing runner relying on balancing holes has to be replaced by a new runner the situation can occur that the modern blade geometry cannot be accommodated by balancing holes of the known type and the installation of balancing pipes is impractical since the existing hydraulic machine is embedded in concrete. It is desirable in many modernization projects to have new runners with blades which extend closer to the axis of rotation at the trailing edge near runner crown. This geometry provides improved performance characteristics but in many cases makes the use of balancing holes in the runner crown less effective at reducing thrust due to radial pumping effects within the runner crown space below the shaft flange. In some cases where the flange connecting the runner to the shaft is at a relatively low elevation, there may no longer be sufficient space available in the runner crown flange to accommodate balancing holes of the known type and so an alternative solution for thrust reduction is necessary.

The objective of the present invention is to propose an alternative concept for reducing the axial thrust being less expensive than balancing pipes and easily applicable within modernization projects.

This objective is achieved by a hydraulic machine according to claim 1. Other favorable implementations of the invention are disclosed in the depended claims.

The inventors have recognized that the axial thrust can be reduced by a runner comprising at least one passage leading from the runner crown to the runner band whereas the passage is located within one of the runner blades.

The invention will hereinafter be described in conjunction with the appended drawings:
Fig. 1 is a cross-sectional view of a portion of a Francis turbine according to the present invention;
Fig. 2 shows section A according to a first embodiment of a runner blade according to Figure 1;
Fig. 3 shows section A according to another embodiment of a runner blade according to Figure 1.

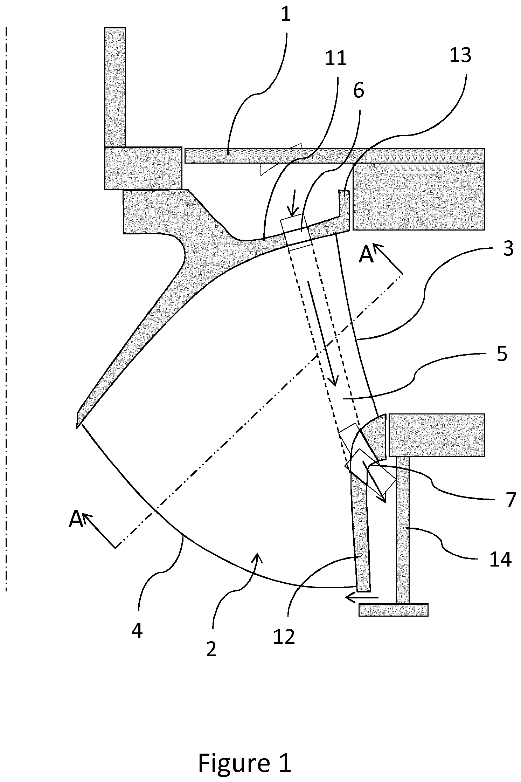

Figure 1 displays schematically a cross-sectional view of a hydraulic machine comprising a Francis type runner according to the present invention. The head cover is designated as 1 and the lower cover as 14. The runner comprises a runner crown which is designated as 11. A runner blade 2 extends between the crown 11 and the band designated as 12. The blade 2 has two edges designate by 3 and 4. The fluid entering the runner flows from edge 3 towards edge 4, whereas the high pressure side adjoins to edge 3 and the low pressure side adjoins to edge 4. It is clear that in pumping mode the flow direction of the fluid is reversed. The runner crown 11 comprises circumferential located sealing means designated as 13. Sealing means 13 are construed to seal the space between head cover 1 and crown 11 against high pressure water. However due to the imperfection of the sealing a small amount of high pressure water will be present in the space above the runner crown 11 leading to the undesired axial thrust. The runner crown 11 comprises an inlet aperture designated by 6. The inlet aperture 6 is located in a portion of the crown, which is exposed to high pressure water passing the sealing means 13. The blade 2 comprises a passage designated by 5. The passage 5 leads from inlet aperture 6 to the band 12 where the passage 5 forms an opening which is designated by 7. The axial thrust is relieved by draining the leakage water from the space above crown 11 directly through the passage 5 inside blade 2 and the opening 7 to a chamber which is located between the band 12 and the lower cover 14. This chamber is connected to the low pressure side of the runner. The flow of the leakage water is indicated by arrows. The dash-dotted line on the left side of figure 1 indicates the axis of rotation of the runner.

Since opening 7 is ideally located at an equal or even slightly larger radial distance from the axis of rotation than the inlet aperture 6 backpressure is avoided due to the radial pumping effect of rotation. Therefore the runner according to the invention relieves the thrust to lower values compared with the runner of US 4,086,020 because the balancing holes of US 4,086,020 leading to the hub and the space between the blades do not adjoin directly to the low pressure side of the runner. The radial pumping effect within the hub of US 4,086,020 is significant and results in higher pressure above the runner and consequently higher axial downthrust.

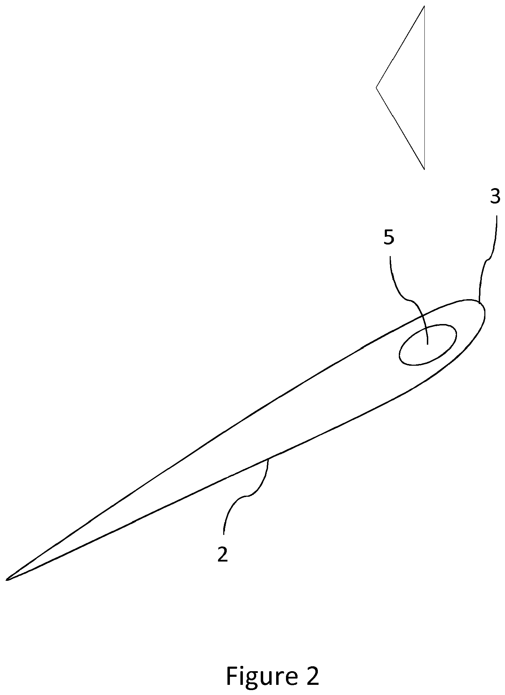

Figure 2 displays schematically a cross-sectional view through the blade 2 of figure 1 along the marked section A. The passage 5 is located near edge 3 adjoining the high pressure side of blade 2. This part of the blade 2 is typically relatively thick and straight. Normally the blade 2 is machined from a casting. The passage 5 according to the embodiment of figure 2 is formed directly while casting the blade 2 which is thus of single piece construction.

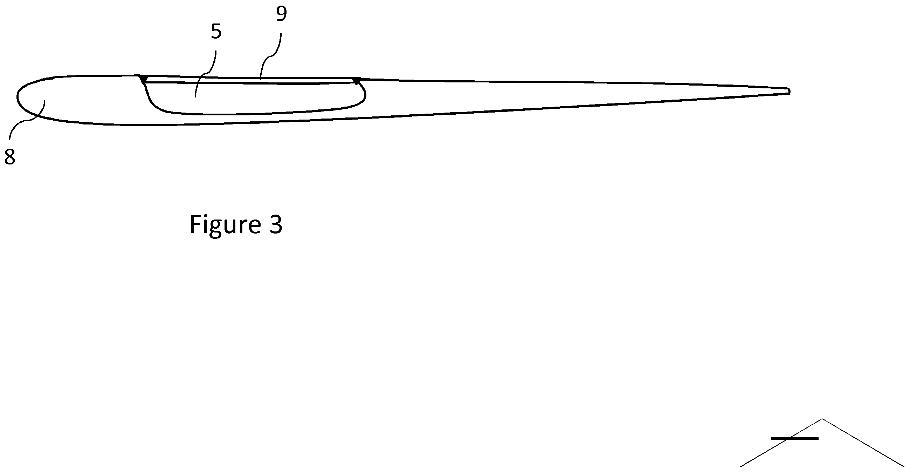

Figure 3 displays schematically a cross-sectional view through the blade 2 of figure 1 along the marked section A according to another embodiment of the present invention. In the view along section A it can be seen that the blade 2 comprises a base part which is designated by 8 and a cover part which is designated by 9. The base part 8 includes either the entire suction side or pressure side surface of the blade, as well as the entire surface of the edge adjoining the high pressure side and the entire surface of the edge adjoining the low pressure side. A cavity is machined or cast into the base part 8. The thinner cover part 9 is attached to the base part 8 thus forming the passage 5. The cover part 9 may be metal or composite material, may be cast formed or machined and may be attached by welding or by a bonding material (epoxy, glue, etc.).

The blade could also be produced with a cavity directly by rapid prototyping methods such as additive manufacturing.

## Claims

1. A hydraulic machine comprising a runner of Francis type, a head cover (1) and a lower cover (14), whereas the runner comprises a low and a high pressure side, a crown (11), a band (12), a plurality of blades (2), each blade (2) being defined by a pressure surface, an oppositely facing suction surface, an edge (3) adjoining the high pressure side and a spaced apart edge (4) adjoining the low pressure side of the runner, whereas the crown comprises sealing means (13) to seal the space between the crown (11) and head cover (1) against water from the high pressure side, whereas the runner comprises at least one passage (5) being capable to drain high pressure leakage water passing the sealing means (13) to the low pressure side, and the passage (5) comprises an inlet aperture (6) located in a portion of the crown (11) which during operation is exposed to high pressure leakage water, **characterized in that** the passage (5) is located within one of the blades (2) and leads from the inlet aperture (6) to the band (12), where the passage (5) forms an opening (7) leading to the space between the band (12) and the lower cover (14), which space is in connection with the low pressure side of the runner.

2. The hydraulic machine of claim 1, wherein the blade (2), in which the passage (5) is located, is of single piece construction and is machined from a casting including the passage (5).

3. The hydraulic machine of claim 1, wherein the blade (2), in which the passage (5) is located, comprises a base part (8) and a cover part (9) where the base part (8) is of single piece construction including the entire edge (3) adjoining the high pressure side, the entire pressure side of the blade (2), as well as the entire surface of the edge (4) adjoining the low pressure side, and where the base part (8) contains a cavity and the cover part (9) is attached to the base part (8) above the cavity to form the passage (5).

4. The hydraulic machine of claim 1, wherein the blade (2), in which the passage (5) is located, comprises a base part (8) and a cover part (9) where the base part (8) is of single piece construction including the entire edge (3) adjoining the high pressure side, the entire suction side of the blade (2), as well as the entire surface of the edge (4) adjoining the low pressure side, and where the base part (8) contains a cavity and the cover part (9) is attached to the base part (8) above the cavity to form the passage (5).

5. The hydraulic machine of claim 1, wherein the blade (2), in which the passage (5) is located, is of single piece construction and is produced by a rapid prototyping method such as additive manufacturing.

## Patentansprüche

1. Hydraulische Maschine, umfassend einen Läufer vom Francis-Typ, eine obere Abdeckung (1) und eine untere Abdeckung (14), wobei der Läufer eine Nieder- und eine Hochdruckseite, einen Innenkranz (11), einen Außenkranz (12), mehrere Schaufeln (2), wobei jede Schaufel (2) durch eine Druckoberfläche, eine in die entgegengesetzte Richtung weisende Saugoberfläche, eine Kante (3), angrenzend an die Hochdruckseite, und eine davon beabstandete Kante (4), angrenzend an die Niederdruckseite des Läufers, definiert wird, wobei der Innenkranz Abdichtmittel (13) zum Abdichten des Raumes zwischen dem Innenkranz (11) und der oberen Abdeckung (1) gegen Wasser von der Hochdruckseite umfasst, wobei der Läufer zumindest einen Durchgang (5) umfasst, der in der Lage ist, Hochdruck-Leckwasser, das die Abdichtmittel (13) passiert, zur Niederdruckseite abzulassen, und wobei der Durchgang (5) eine Einlassöffnung (6), befindlich in einem Teil des Kranzes (11), der während des Betriebs Hochdruck-Leckwasser ausgesetzt ist, umfasst, **dadurch gekennzeichnet, dass** der Durchgang (5) innerhalb einer der Schaufeln (2) befindlich ist und von der Einlassöffnung (6) zum Außenkranz (12) führt, wobei der Durchgang (5) eine Öffnung (7) bildet, die in den Raum zwischen dem Außenkranz (12) und der unteren Abdeckung (14) führt, wobei der Raum in Verbindung mit der Niederdruckseite des Läufers ist.

2. Hydraulische Maschine nach Anspruch 1, wobei die Schaufel (2), in der sich der Durchgang (5) befindet, von einstückigem Aufbau ist und aus einem Gussteil, den Durchgang (5) enthaltend, gefertigt ist.

3. Hydraulische Maschine nach Anspruch 1, wobei die Schaufel (2), in der sich der Durchgang (5) befindet, einen Basisteil (8) und einen Abdeckungsteil (9) umfasst, wobei der Basisteil (8) von einstückigem Aufbau ist, umfassend die gesamte Kante (3), angrenzend an die Hochdruckseite, die gesamte Druckseite der Schaufel (2) sowie die gesamte Oberfläche der Kante (4), angrenzend an die Niederdruckseite, und wobei der Basisteil (8) einen Hohlraum enthält und der Abdeckungsteil (9) am Basisteil (8) über dem Hohlraum befestigt ist, um den Durchgang (5) zu bilden.

4. Hydraulische Maschine nach Anspruch 1, wobei die Schaufel (2), in der sich der Durchgang (5) befindet, einen Basisteil (8) und einen Abdeckungsteil (9) umfasst, wobei der Basisteil (8) von einstückigem Aufbau ist, umfassend die gesamte Kante (3), angrenzend an die Hochdruckseite, die gesamte Saugseite der Schaufel (2) sowie die gesamte Oberfläche der Kante (4), angrenzend an die Niederdruckseite, und wobei der Basisteil (8) einen Hohlraum enthält und der Abdeckungsteil (9) am Basisteil (8) über dem Hohlraum befestigt ist, um den Durchgang (5) zu bilden.

5. Hydraulische Maschine nach Anspruch 1, wobei die Schaufel (2), in der sich der Durchgang (5) befindet, von einstückigem Aufbau ist und durch ein Rapid-Prototyping-Verfahren, wie etwa additive Fertigung gefertigt wird.

## Revendications

1. Machine hydraulique comprenant une roue du type Francis, un couvercle de tête (1) et un couvercle inférieur (14), la roue comprenant un côté basse pression et un côté haute pression, une couronne (11), une bande (12), une pluralité d'aubes (2), chaque aube (2) étant définie par une surface de pression, une surface d'aspiration faisant face à l'opposé, un bord (3) adjacent au côté haute pression et un bord espacé (4) adjacent au côté basse pression de la roue, la couronne comprenant un moyen d'étanchéité (13) pour rendre étanche l'espace entre la couronne (11) et le couvercle de tête (1) contre l'eau provenant du côté haute pression, la roue comprenant au moins un passage (5) pouvant évacuer l'eau de fuite haute pression passant le moyen d'étanchéité (13) vers le côté basse pression, et le passage (5) comprenant une ouverture d'entrée (6) située dans une partie de la couronne (11) qui, pendant le fonctionnement, est exposée à l'eau de fuite haute pression, **caractérisée en ce que** le passage (5) est situé à l'intérieur de l'une des aubes (2) et mène de l'ouverture d'entrée (6) à la bande (12), où le passage (5) forme une ouverture (7) menant à l'espace entre la bande (12) et le couvercle inférieur (14), lequel espace est en relation avec le côté basse pression de la roue.

2. Machine hydraulique selon la revendication 1, l'aube (2), dans laquelle le passage (5) est situé, étant de construction monobloc et étant usinée à partir d'une pièce moulée comprenant le passage (5).

3. Machine hydraulique selon la revendication 1, l'aube (2), dans laquelle le passage (5) est situé, comprenant une partie de base (8) et une partie de couvercle (9), la partie de base (8) étant de construction monobloc comprenant tout le bord (3) adjacent au côté haute pression, tout le côté pression de l'aube (2), ainsi que toute la surface du bord (4) adjacente au côté basse pression, et la partie de base (8) contenant une cavité et la partie de couvercle (9) étant fixée à la partie de base (8) au-dessus de la cavité pour former le passage (5) .

4. Machine hydraulique selon la revendication 1, l'aube (2), dans laquelle le passage (5) est situé, comprenant une partie de base (8) et une partie de couvercle (9), la partie de base (8) étant de construction monobloc comprenant tout le bord (3) adjacent au côté haute pression, tout le côté aspiration de l'aube (2), ainsi que toute la surface du bord (4) adjacent au côté basse pression, et la partie de base (8) contenant une cavité et la partie de couvercle (9) étant fixée à la partie de base (8) au-dessus de la cavité pour former le passage (5) .

5. Machine hydraulique selon la revendication 1, l'aube (2), dans laquelle le passage (5) est situé, étant de construction monobloc et étant produite par un procédé de prototypage rapide tel que la fabrication additive.
